# EUROPEAN PATENT APPLICATION

(11) **EP 2 573 409 A1**
(43) Date of publication of application: **27.03.2013**
(21) Application number: 12185734.6
(22) Date of filing: 24.09.2012
(51) Int. Cl.: F16B 12/20

(54) **Connection device between two or more furniture components**

(30) Priority: 22.09.2011 IT UD20110146
(71) Applicant: Friul Intagli Industries S.p.A., 33080 Prata di Pordenone (PN) (IT)
(72) Inventor: Carretta, Flavio, 31040 Mansuè (TV) (IT)
(74) Representative: Petraz, Gilberto Luigi

(57) **Abstract**

A connection device (10) is suitable to connect two or more components of pieces of furniture of which one is a bearing component and at least one is coupled and made solid with the bearing component by means of a drawing action. The connection device (10) comprises a first tie rod (11) and a second tie rod (12), at least one of which is associable with drawing means located in the coupled component. The first tie rod (11) and the second tie rod (12) are suitable to be reciprocally connected inside the above-mentioned bearing component by means of a threaded or bayonet-type coupling.

## Description

### FIELD OF THE INVENTION

The present invention concerns a connection device between two or more furniture components and particularly, but not only, between at least two of the following elements: a leg, a headrest, a footrest, one or more lateral boards of a bed.

### BACKGROUND OF THE INVENTION

The technique for assembling furniture is known, which provides to use attachment means consisting of tie rods and eccentrics. For example, in the case of beds, the attachment means allow to connect an upright, called leg, and/or one or more transverse elements, such as for example a headrest, a footrest, and lateral boards.

In the state of the art, the upright is provided with one or more seatings suitable to house a metal bushing, normally threaded on the outside and inside, into which the threaded end of a tie rod is screwed.

Each transverse element has at least one hole suitable to contain the remaining part of the tie rod and at least one cavity, normally orthogonal to said hole, which functions as a seating for the eccentric and is directly connected to the hole. The coupling of the eccentric and the shaped head of the tie rod guarantees, through the rotation of the eccentric, that the two elements of the piece of furniture are brought together and thus attached.

The attachment can be reinforced by using tie rods suitably worked on their cylindrical surface, or by putting stud blocks adjacent to the tie rods.

One disadvantage of this known attachment system is that, in order to perform its function correctly, the bushing must necessarily cooperate with material suitable to resist traction forces. In the case of chip material, MDF or expanded material, or a mixture of chip and expanded, the bushings tend not to stay in position when there is a strong traction.

Document US-A-5,823,700 describes a releasable rapid connection device of a known type for connecting the front part of a drawer of a furnishing element to the body of the drawer. The connection device includes a single bar with a first connection portion by means of a rotary fastener and a second T-shaped portion for connecting with a threaded bushing. This known solution has the same disadvantages as described above: that is, in the case of chip material, MDF or expanded material, or a mixture of chip and expanded, when there is a strong traction the bushing may not keep its position and may therefore come out of the housing seating.

Document WO-A-80/02866 describes a known connection device to connect two parts of a furnishing element. The known connection device includes a first and a second connection bar, inserted in housing holes made in the two parts to be connected. The first bar protrudes with its own connection portion that has a threaded hole to cooperate with a threaded connection portion of the second bar, which is therefore screwed to the first bar. The first bar also has another hole, at the end opposite the connection portion with threaded hole, to cooperate with a transverse clamping pin that is screwed. The second bar also has a threaded hole, at the opposite end of the threaded connection portion, for insertion by means of screwing a screw or threaded pin.

It can be complex and costly to produce said connection device, as it needs a large number of operations for making not only the threaded hole for the reciprocal connection of the two bars, but also the connection holes at the ends of the two bars.

Furthermore, the practical use of this known solution is somewhat laborious and complicated, requiring skill and time, since it needs a correct reciprocal alignment both between the two bars and also of the end connection holes for cooperation with the pins to be screwed.

Moreover, this solution is not reliable because using a threaded screw for at least one of the two bars in practice does not put the corresponding bar under traction and therefore does not allow an adequate traction of the connection device. It therefore does not put under a correct drawing action the parts of the piece of furniture that are connected, because the screw functions solely as a transverse constraint to prevent the bar from coming dis-inserted. It is also believed that this known solution is not suitable to connect three components of a furnishing element, such as an upright and two transverse elements.

Purpose of the present invention is to obtain a connection device that allows the attachment and traction of two or more elements of a piece of furniture, which is simple and economical, at the same time guaranteeing solidity and stability over time, irrespective of the type of material.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a connection device according to the present invention, which overcomes the shortcomings of the state of the art and eliminates the defects therein, is suitable to connect two or more components of a piece of furniture or furnishing element, such as for example an upright and/or one or more transverse elements of a bed. One of the components to be assembled functions as a bearing component, to which the other components are coupled and made solid by means of a drawing action.

According to a main characteristic of the present invention, the connection device comprises two elements, a first bar-type tie rod and a second bar-type tie rod.

Both the bar-type tie rods have an attachment or tensioning member at one end, and substantially on the opposite side to it, reciprocal connection means. In particular, the first tie rod comprises a threaded transverse hole, the axis of which can be orthogonal, or not, to the longitudinal axis of the tie rod, while the second tie rod has a threaded end, suitable to be screwed into the above-mentioned threaded transverse hole. This coupling of the tie rods is situated, during use, inside the bearing component of the piece of furniture.

In some forms of embodiment, at least one of either said first bar-type tie rod and said second bar-type tie rod comprises at one end a cooperation member which has a shaped head suitable to achieve a fixed-joint coupling with a mating drawing mean that includes an eccentric rotating fastener.

In some forms of embodiment, the shaped head is made solid. In other words, in variant embodiments the shaped head does not have blind or through connection holes. In some forms of embodiment, the first bar-type tie rod and the second bar-type tie rod do not have other connection holes apart from the threaded transverse hole cited above and provided for screwing the second bar-type tie rod into the first bar-type tie rod.

The present invention overcomes the shortcomings of the complexity and cost of making the known connection devices, since it only needs a single threaded transverse hole for the reciprocal connection of the two bar-type tie rods. Moreover, the present invention is also easy and quick to instal and clamp, due to the specific configuration of the shaped head, which can obtain the fixed-joint constraint and traction of the second tie rod and possibly the first tie rod to the corresponding component of the piece of furniture, by means of the eccentric rotating fastener, which is totally intuitive to insert and clamp and does not need laborious alignment operations as required in the state of the art. Furthermore, since it can put the bar-type tie rods under traction, the present invention allows to put the components of the piece of furniture which are connected correctly under traction, thus giving a more reliable and stronger constraint.

According to variant embodiments, the shaped head includes a solid shaft with an axial development which projects from a cylindrical body.

According to variant embodiments, the present invention comprises at least an element that protrudes transversely from the solid shaft, configured to obtain a fixed joint and receive an action of traction exerted by the eccentric rotating fastener parallel to a longitudinal axis of the cylindrical body.

In some forms of embodiment, said at least one transversely protruding element comprises at least a discoidal anchoring crest with a radial development orthogonal to the solid shaft to cooperate in a fixed joint and in traction with the eccentric rotating fastener.

In some forms of embodiment, the present invention comprises a plurality of said transversely protruding elements.

According to variant embodiments, the plurality of transversely protruding elements comprises a plurality of discoidal anchoring crests protruding from the solid shaft and disposed at a defined pitch with respect to each other along the longitudinal axis of the solid shaft.

According to one form of embodiment of the present invention, the first and the second tie rod have lengths coordinated with the sizes of the element into which they are inserted.

According to a variant, if only one transverse element is attached to an upright, one of the two tie rods does not have the cooperation members with tensioning means and performs the function of a contrasting element for the tie rod associated with the transverse element of the piece of furniture.

According to another variant, the connection device has a bayonet-type attachment system between the first and second tie rod.

With the connection device according to the present invention, it is possible to assemble mechanically the elements that make up a piece of furniture, advantageously a bed, obtaining the following advantages: better division of the forces acting on the material that makes up the piece of furniture, easier assembly and dis-assembly, stability over time, solidity and versatility in the field of application.

The present invention also concerns a kit for connecting two or more furniture components of which one is a bearing component and at least one is coupled and made solid with the bearing component, comprising a connection device as described above and at least a drawing mean that includes an eccentric rotating fastener.

In some forms of embodiment, the eccentric rotating fastener is formed by a shaped cylinder that includes a window for inserting the shaped head, a curvilinear plane shaped like a rising and falling ramp which develops partly around the axis of the eccentric rotating fastener and defines a shaped housing and an abutment wall.

The present invention also concerns a set of two or more furniture components of which one is a bearing component and at least one can be coupled and made solid with the bearing component, by means of a connection device or a connection kit as described above.

Furthermore, the present invention also concerns a structure for a bed, and a bed including the structure, which comprises a set of two or more components as in the claim.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a three-dimensional view of one form of embodiment of a connection device according to the present invention;
- fig. 2 is a three-dimensional view of one form of embodiment of the connection device in fig. 1;
- fig. 3 is a section according to plane A of fig. 2;
- fig. 4 is a section of a variant of the present invention;
- fig. 5 is a section of another variant of the present invention;
- fig. 6 is another three-dimensional view of one form of embodiment of the connection device in fig. 1.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DESCRIPTION OF SOME FORMS OF EMBODIMENT

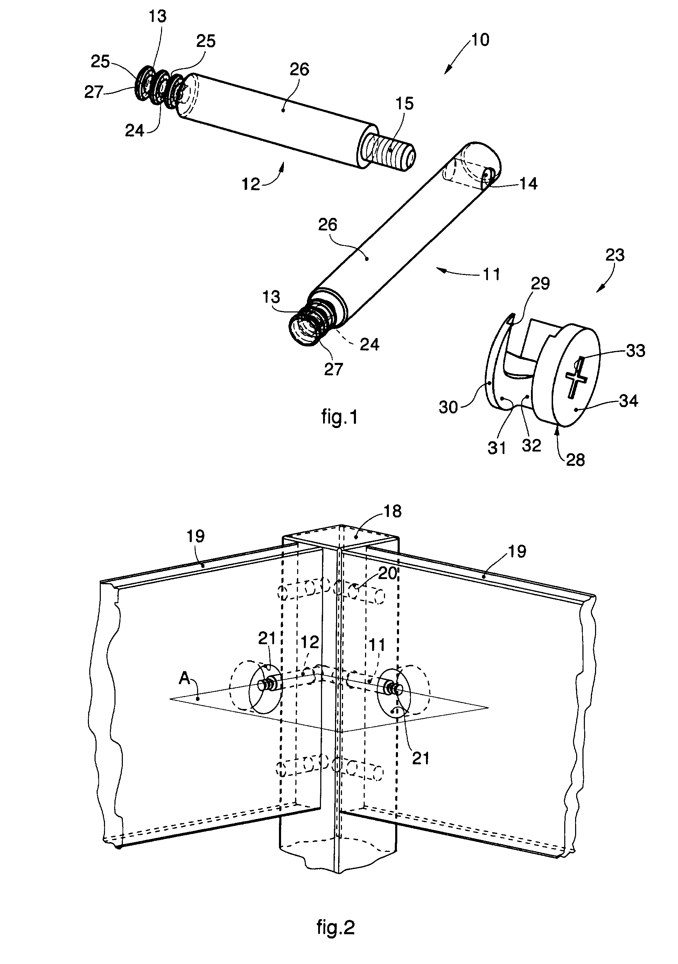

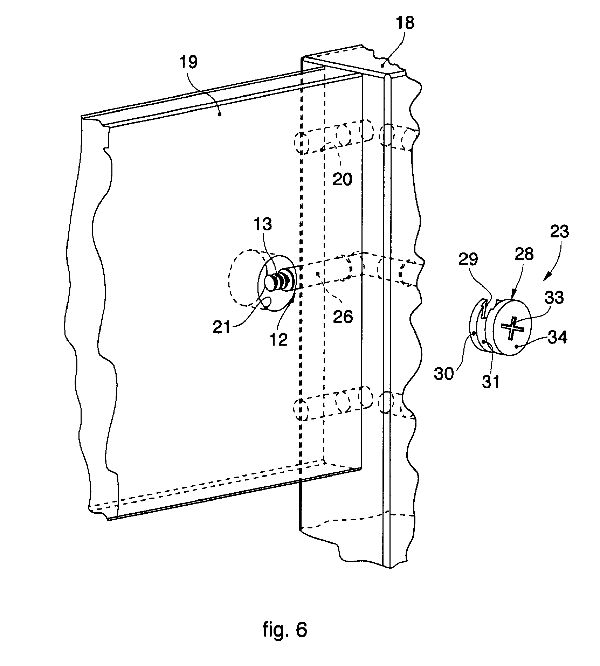

With reference to fig. 1, a connection device 10 according to the present invention comprises two elements, in this case made of metal and with a substantially cylindrical geometry, configured as first and second bar-type tie rod 11, 12, each including a cylindrical body 26. The first bar-type tie rod 11 and/or the second bar-type tie rod 12 in this case have a shaped head 13 at one end, suitable to be connected to suitable tensioning means, such as for example eccentrics, which include an eccentric rotating fastener 23 shown for example in figs. 1 and 6.

According to variant embodiments, both the first bar-type tie rod 11 and the second bar-type tie rod 12 have said shaped head 13 at one end.

In other variants, only one of either the first bar-type tie rod 11 or the second bar-type tie rod 12 has said shaped head 13 at one end.

According to the present invention, the shaped head 13 is made solid, that is, it has no attachment holes, and is shaped to define a fixed-joint coupling with the eccentric rotating fastener 23.

In some forms of embodiment, the shaped head 13 includes a solid shaft 24 with an axial development which projects from the cylindrical body 26 of the corresponding first bar-type tie rod 11 or the second bar-type tie rod 12. The solid shaft 24 has at least one, advantageously a plurality of transversely protruding elements configured to achieve a fixed joint and receive an action of traction exerted by said eccentric rotating fastener 23 parallel to a longitudinal axis of said cylindrical body 26 and hence of the solid shaft 24.

In some forms of embodiment, the transversely protruding elements comprise discoidal anchoring crests 27 with a radial development orthogonal to the solid shaft 24, associated to corresponding annular gripping seatings 25 provided between them, in order to cooperate with the eccentric rotating fastener 23. In other variants, the transversely protruding elements can include other elements of a polygonal shape, or shaped teeth or similar or equivalent elements.

In forms of embodiment that provide a plurality of discoidal anchoring crests 27, these are disposed at a defined pitch with respect to each other along the longitudinal axis of the solid shaft 24.

The presence of several discoidal anchoring crests 27 can be advantageous since it can allow a modulation of the clamping force by means of the eccentric rotating fastener 23.

In fact, by selectively rotating the eccentric rotating fastener 23 it is possible to define the successive anchoring with one of the discoidal anchoring crests 27 which are progressively axially closer to, or more distant from, the cylindrical body 26, thus selecting the necessary clamping force.

The cited pitch between the discoidal anchoring crests 27 is configured as a function of the desired drawing action, progressively selectable, which the eccentric rotating fastener 23 has to exert on the shaped head 13.

In some forms of embodiment, the eccentric rotating fastener 23 is formed by a shaped cylinder 28 that includes a window 29 for the insertion of the solid shaft 24 and one or more discoidal anchoring crests 27 of the shaped head 13, a curvilinear plane shaped like a rising and falling ramp 30 which develops following a curved path partly around the axis of the eccentric rotating fastener 23 and defines a shaped housing 31 and an abutment wall 32.

The eccentric rotating fastener 23 may be made to rotate around its axis thanks to a slot 33 for a screwdriver, for example a Philips screwdriver, made on the head 34 of the eccentric rotating fastener 23.

Once the solid shaft 24 is inserted into the window 29, the rotation of the eccentric rotating fastener 23 takes the solid shaft 24 itself, and one of the discoidal anchoring crests 27, to slide along the ramp-shaped curvilinear plane 30, until they cooperate, in correspondence with the falling part of the ramp-shaped curvilinear plane 30, with the abutment wall 32, causing the shaped head 13 to be retained and obtaining the cited fixed-joint coupling of the shaped head 13 and the eccentric rotating fastener 23.

Sliding along the ramp-shaped curvilinear plane 30 also causes the progressive traction on the shaped head 13, putting the corresponding first bar-type tie rod 11 or second bar-type tie rod 12 under traction (figs. 1 and 6).

At the opposite end of the shaped head 13, the first bar-type tie rod 11 in this case has a through threaded transverse hole 14, while the second bar-type tie rod 12 has a threaded end 15, suitable to be screwed into the threaded transverse hole 14.

Consequently, the first bar-type tie rod 11 does not have other holes for attachment components, except for the cited threaded transverse hole 14 for screwing in the second bar-type tie rod 12, while the second bar-type tie rod 12 does not have any holes for attachment components.

With reference to fig. 2, the connection device 10 is used in this case to connect an upright 18 and two transverse boards 19, according to the method described hereafter.

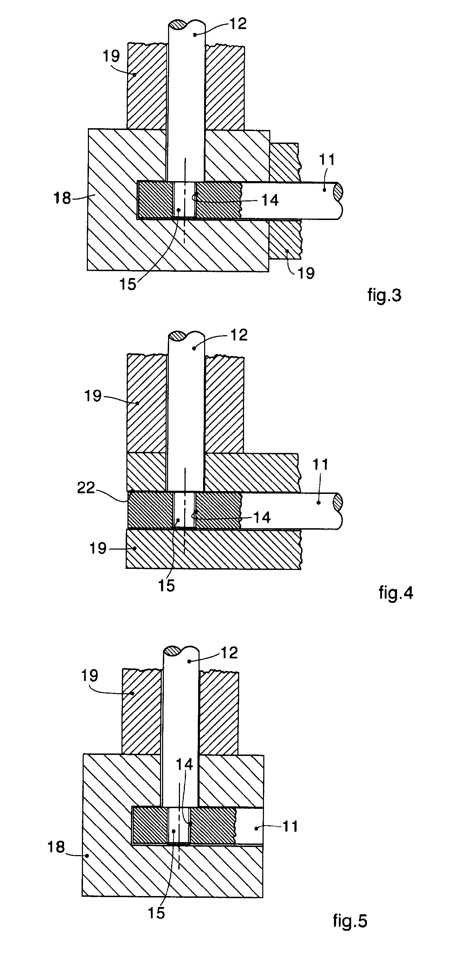

With reference to figs. 2 and 3, a housing hole 20 is made on each of two adjacent longitudinal faces of the upright 18.

The housing holes 20 thus made are communicating, that is, their axes intersect in correspondence with an intersection zone in which, during use, the second bar-type tie rod 12 is screwed into the first bar-type tie rod 11.

The first bar-type tie rod 11 is inserted into one of the above-mentioned housing holes 20 and the second bar-type tie rod 12 is inserted into the homologous housing hole 20.

The second bar-type tie rod 12 is connected to the first bar-type tie rod 11 by screwing the threaded end 15 onto the complementary threaded transverse hole 14.

In this configuration, the first bar-type tie rod 11 and the second bar-type tie rod 12 lie with their respective transverse axes, in this case orthogonal, disposed on a common lying plane, indicated by the letter A in fig. 2.

The assembly is completed by mechanically assembling the transverse boards 19 with the upright 18. To this purpose, in this case, each transverse board 19 has a cavity 21 suitable to contain the shaped head 13 of the first bar-type tie rod 11 or the second bar-type tie rod 12.

The cavity 21 in this case functions as a seating for the eccentric rotating fastener 23, shown in figs. 1 and 6.

It is clear, however, that modifications and/or additions of parts may be made to the connection device 10 and the assembly method as described heretofore, without departing from the field and scope of the present invention.

For example, by means of the connection device 10, two transverse boards 19 can be connected together, without using the upright 18 (fig. 4). In this case, an aperture 22 may or may not be provided, made in one of the transverse boards 19, for the insertion of the first bar-type tie rod 11, which may possibly be closed later by a stopper or similar covering member.

Furthermore, it is possible to modify one of the two tie rods, in order to connect the upright 18 and only one transverse board 19. In this case the modified tie rod, without the shaped head 13, functions as a contrasting element (fig. 5).

According to variant embodiments, the threaded end 15 of the second bar-type tie rod 12 is sized so that, when it is screwed into the threaded transverse hole 14, it may not protrude from the lateral surface of the first bar-type tie rod 11, remaining flush with the latter.

In other variant embodiments, the end of the first bar-type tie rod 11 which has the threaded transverse hole 14 is sized so that, when the first bar-type tie rod 11 is connected to the second bar-type tie rod 12, it may not protrude from the lateral surface of the second bar-type tie rod 12, remaining flush with the latter.

It is also clear that, although the present invention has been described with reference to a specific example, a person of skill in the art shall certainly be able to achieve many other equivalent forms of connection device 10, having the characteristics as set forth in the claims and hence all coming within the field of protection defined thereby.

## Claims

1. Connection device (10) suitable to connect two or more components of pieces of furniture of which one is a bearing component and at least one is coupled and made solid with said bearing component, said connection device (10) comprising a first bar-type tie rod (11) and a second bar-type tie rod (12), at least one of said bar-type tie rods (11, 12) being associable with drawing means located in the coupled component, **characterized in that** said first bar-type tie rod (11) and said second bar-type tie rod (12) are suitable to be reciprocally connected inside said bearing component by means of a threaded or bayonet-type coupling and **in that** at least one of either said first bar-type tie rod (11) or said second bar-type tie rod (12) comprises at one end a cooperation member which has a shaped head (13) suitable to achieve a fixed-joint coupling with a mating drawing mean which includes an eccentric rotating fastener (23).

2. Connection device as in claim 1, **characterized in that** said shaped head (13) is made solid.

3. Connection device as in claim 2, **characterized in that** said shaped head (13) includes a solid shaft (24) with an axial development which projects from a cylindrical body (26) which is axially aligned to it.

4. Connection device as in claim 3, **characterized in that** it comprises at least an element protruding transversely from the solid shaft (24) and configured to make a fixed joint and receive an action of traction exerted by said eccentric rotating fastener (23) parallel to a longitudinal axis of said cylindrical body (26).

5. Connection device as in claim 4, **characterized in that** said at least one transversely protruding element comprises at least a discoidal anchoring crest (27) with a radial development orthogonal to the solid shaft (24) in order to cooperate in a fixed joint and in traction with the eccentric rotating fastener (23).

6. Connection device as in claim 4 or 5, **characterized in that** it comprises a plurality of said transversely protruding elements.

7. Connection device as in claims 5 and 6, **characterized in that** it comprises a plurality of discoidal anchoring crests (27) protruding from the solid shaft (24) and disposed at a defined pitch with respect to each other along the longitudinal axis of the solid shaft (24).

8. Connection device as in any claim hereinbefore, **characterized in that** said first bar-type tie rod (11) has a threaded transverse hole (14) suitable to couple with a threading present in said second bar-type tie rod (12), located at the opposite end of said shaped head (13) with drawing means.

9. Connection device as in any claim hereinbefore, **characterized in that** said first bar-type tie rod (11) and said second bar-type tie rod (12) are both provided with a shaped head (13).

10. Connection device as in any claim from 1 to 8, **characterized in that** one of said first bar-type tie rod (11) and second bar-type tie rod (12) does not have the shaped head (13) and assumes the sole function of a contrasting element.

11. Kit to connect two or more furniture components of which one is a bearing component and at least one is coupled and made solid with said bearing component, comprising a connection device as in any claim hereinbefore and at least a drawing mean which includes an eccentric rotating fastener (23).

12. Kit as in claim 11, **characterized in that** the eccentric rotating fastener (23) is formed by a shaped cylinder (28) which includes a window (29) for the insertion of the shaped head (13), a curvilinear plane shaped like a rising and falling ramp (30) which develops partly around the axis of the eccentric rotating fastener (23) and defines a shaped housing (31) and an abutment wall (32).

13. Set of two or more furniture components of which one is a bearing component and at least one can be coupled and made solid with said bearing component using a connection device as in any claim from 1 to 10 or a connection kit as in one of claims 11 or 12.

14. Structure for a bed which comprises a set of two or more components as in claim 13.
